# EUROPEAN PATENT APPLICATION

(11) **EP 2 056 540 A1**
(43) Date of publication of application: **06.05.2009**
(21) Application number: 07785453.7
(22) Date of filing: 24.08.2007
(51) Int. Cl.: H04L 12/56

(54) **A METHOD, SYSTEM AND APPARATUS FOR RADIO LINK CONTROL TRANSMISSION**

(30) Priority: 26.08.2006 CN 200610115139
(71) Applicant: Huawei Technologies Co., Ltd., Longgang District Shenzhen 518129 (CN)
(72) Inventor: GENG, Fenghua, Shenzhen 518129 (CN)
(74) Representative: Haley, Stephen
(86) International application number: PCT/CN2007/070556
(87) International publication number: WO 2008/034374

(57) **Abstract**

A Radio Link Control (RLC) based transmission method includes: starting, by a transmitting endpoint, a timer used for monitoring an upper layer Protocol Data Unit, PDU; and stopping retransmitting after the timer expires, by the transmitting endpoint, all RLC data blocks of the upper layer PDU in a buffer if not all acknowledgement indications of all the RLC data blocks of the upper layer PDU are received from a receiving endpoint before the timer expires. Embodiments of present invention also provide an RLC based transmission system including a transmitting apparatus. According to the method and system of the present invention, the transmission delay can be reduced effectively and the services which are sensitive for the transmission delay can be better supported.

## Description

### Field of the Invention

The present invention relates to mobile communication technologies, and more particularly, to a Radio Link Control (RLC) based transmission method, system and apparatus.

### Background of the Invention

Along with the development of science and technology, the requirement for mobile communication services and the quality of the mobile communication services is growing. At present, in a smooth transition process from 2nd Generation Mobile Communications System (2G) to 3rd Generation Mobile Communications System (3G), an import problem being encountered is to improve a transmission rate and reduce a transmission delay using limited radio resources.

Main evolving technologies in the period from 2G to 3G include General Packet Radio Service (GPRS) and Enhanced Data rate for GSM Evolution (EDGE) technology and etc.. GPRS, generally called 2.5G, is a packet data exchanging technology introduced into GSM network in 2G. EDGE, generally called 2.75G, is a mobile communication technology with enhanced date rate on the basis of GSM or GPRS network. In mobile communication, regardless of 2G, 2.5G or 2.75G, data transmitted via an air interface should be firstly processed using two protocols, i.e. RLC and Media Access Control (MAC) protocols. RLC provides segment and retransmission services for user data and control data. An upper layer Protocol Data Unit (PDU) is segmented into data blocks convenient for an air transmission by RLC. And two types of data transmission methods, i.e. Unacknowledged Mode (UM) and Acknowledged Mode (AM) are provided.

In the UM, it is not guaranteed to transmit data packets to a receiving endpoint correctly when upper layer PDUs are transmitted in an RLC layer, because a retransmission mechanism is not triggered by RLC. No action is taken by RLC when an error occurs in the transmission of RLC data block. In the AM, it is guaranteed to correctly transmit all data blocks in a data packet to the receiving endpoint when upper layer PDUs are transmitted. The reason is that when a data block is transmitted incorrectly, the transmitting endpoint would receive error information from the receiving endpoint, trigger the retransmission mechanism in accordance with the information, and retransmit the dada block to the receiving endpoint. In order to implement the data retransmission, a buffer is set in the RLC layer used for buffering the upper layer PDUs.

As can be seen from the above, it is difficult to guarantee the correctness of data transmission as there is no retransmission mechanism in the UM. Though the correctness of data transmission is greatly improved in the AM, the delay of data transmission is increased due to the repeated retransmission. Services which are sensitive to transmission delay such as Voice over Internet Protocol (VoIP) require both a short transmission delay and certain correctness of data transmission. At present, a new RLC transmission mode, i.e. Non Persistent Mode (NPM) is advanced for such services. In the NPM, when upper layer PDUs are transmitted, a retransmission mechanism is used for part of the PDUs, which does not guarantee that all data blocks of the PDUs are transmitted to the receiving endpoint correctly.

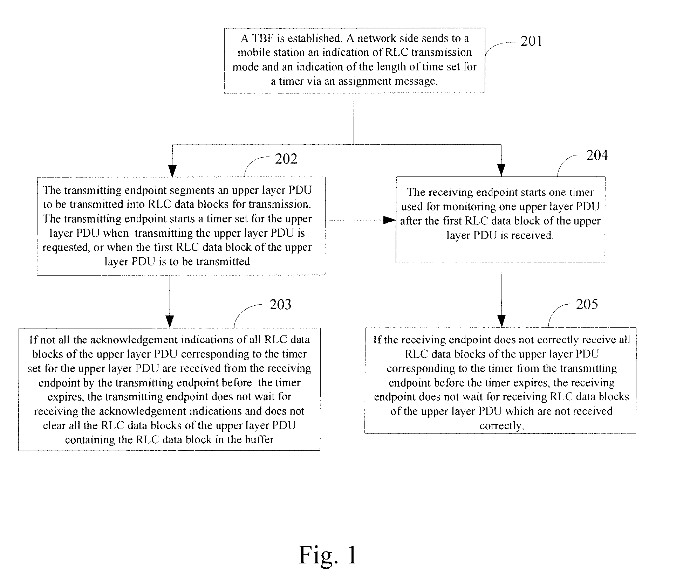

The NPM is described as follows taking GPRS as an example in accordance with Figure 1.

Processing flows in the NPM are similar both in the uplink transmission and in the downlink transmission. Accordingly, the uplink transmission is not distinguished specifically with the downlink transmission in the following descriptions for simplicity and clarity of the description. The party which transmits data, no matter it is the network side or the mobile station, is called a transmitting endpoint. The party which receives data, no matter it is the network side or the mobile station, is called a receiving endpoint. The phrase 'from the transmitting endpoint to the receiving endpoint' refers to 'from the network side to the mobile station' or 'from the mobile station to the network side'. Other similar parts in the application are processed in this manner.

Figure 1 is a flowchart illustrating an NPM in accordance with a conventional method. As shown in Figure 1, the method includes processes described as follows.

Block 101: A Temporary Block Flow (TBF) is established. A network side sends to a mobile station an indication of NPM transmission mode and an indication of the length of time set for a timer via an assignment message. Then, refers to Blocks 102 and 103 which are performed at a transmitting endpoint, and refers to Blocks 104 and 105 which are performed at a receiving endpoint.

In GPRS, when data is transmitted between two Radio Resource (RR) entities such as a network side and a mobile station, a physical connection, i.e. a TBF is established firstly. After a TBF is established, data can be transmitted between the network side and the mobile station. When the data transmission is completed, the TBF is released. A new TBF is established if there is data to be transmitted again.

The length of time set for a timer is derived from the value of an allowable transmission delay, i.e. maximum value of an allowable transmission delay for transmitting an upper layer PDU through an air interface. The length of time set for the timer is configured by the network side according to requirements of different services.

Block 102: The transmitting endpoint segments upper layer PDUs into RLC data blocks, and sets a timer for each RLC data block. Every time when transmitting one RLC data block to the receiving endpoint, the transmitting endpoint starts one timer set for the RLC data block.

Block 103: If the transmitting endpoint does not receive an acknowledgement indication of the RLC data block corresponding to one timer before the timer expires, the transmitting endpoint does not wait for receiving the acknowledgement indication after the timer expires, and implement the following process on the assumption that the transmission for the RLC data block is completed. The transmitting endpoint clears all RLC data blocks of the upper layer PDUs containing the RLC data block in the buffer. Till then, the processes at the transmitting endpoint are completed.

Block 104: When detecting transmission error of one RLC data block sent from the transmitting endpoint, the receiving endpoint starts a timer used for monitoring the RLC data block.

Block 105: If the receiving endpoint does not correctly receive one retransmitted RLC data block corresponding to the timer from the transmitting endpoint before the timer expires, the receiving endpoint implements the subsequent data encapsulation instead of waiting for receiving the retransmitted RLC data block after the timer expires.

In the above scheme, an upper layer PDU can be segmented into several RLC data blocks if the upper layer PDU is big enough. Because one timer is set for each RLC data block of the upper layer PDU at the transmitting endpoint, there is certain transmission delay between the timers due to different transmission time for each RLC data block. Accordingly, the length of transmission time is prolonged for the whole upper layer PDU. Therefore, a large upper layer PDU may cause a large transmission delay. As a result, services which are sensitive to transmission delay can not be supported well, and system resources are wasted because of setting a large number of timers.

### Summary

In view of the above, some embodiments of the present invention provide a RLC based transmission method, and other embodiments provide a RLC based transmission system and apparatus to reduce the transmission delay.

A RLC based transmission method provided by embodiments of the present invention includes:
starting, by a transmitting endpoint, a timer used for monitoring an upper layer Protocol Data Unit, PDU; and
stopping retransmitting after the timer expires, by the transmitting endpoint, all RLC data blocks of the upper layer PDU in a buffer if not all acknowledgement indications of all the RLC data blocks of the upper layer PDU are received from a receiving endpoint before the timer expires.

Preferably, if not all the acknowledgement indications of all the RLC data blocks of the upper layer PDU are received from the receiving endpoint before the timer expires, the method further includes:
not retaining all the RLC data blocks of the upper layer PDU from the buffer after the timer expires.

Preferably, the method of starting the timer used for monitoring the PDU includes:
starting the timer when the upper layer PDU is requested to be transmitted, or when beginning transmitting a first RLC data block of the upper layer PDU.

Preferably, the method further includes:
starting, by the receiving endpoint, a timer used for monitoring the upper layer Protocol Data Unit, PDU, when a first RLC data block of the upper layer PDU is received; and
stopping, after the timer expires, receiving RLC data blocks which are not received correctly of the upper layer PDU if not all RLC data blocks of the upper layer PDU are received correctly before the timer expires.

Preferably, when one RLC data block contains data of more than one upper layer PDUs, the method further includes:
not retaining the RLC data block in the buffer when the RLC data block is not needed to be retransmitted by all the upper layer PDUs.

Preferably, when one RLC data block contains data of more than one upper layer PDUs, the method further includes:
retaining the RLC data block in the buffer when the RLC data block is needed to be retransmitted by one or more than one of the upper layer PDUs.

Preferably, the method further includes:
regarding, at the receiving endpoint, a false RLC data block as a new upper layer PDUx, and starting a timer used for monitoring PDUx if it is unable to identify data contained in the false RLC data block is from more than one upper layer PDUs;
regarding the RLC data block following PDUx as a new upper layer PUDy, and starting another timer used for monitoring PDUy; and
waiting for receiving a retransmitted correct RLC data block corresponding to the false RLC data block, and correcting timers and RLC data blocks according to the result of the waiting.

Preferably, the method of correcting the timers and the RLC data blocks according to the result of the waiting includes:
stopping timers which do not have to be started according to the data of upper layer PDUs contained in the RLC data block if the retransmitted correct RLC data block is received; and stopping the timer used for monitoring the upper layer PDU normally if all the RLC data blocks belonging to the upper layer PDU are correctly received; and
regarding the false RLC data block as a new upper layer PDU if the correct RLC data block is not received, and regarding the RLC data block as a new PDU if a next RLC data block following the false RLC data block is correctly transmitted.

A Radio Link Control, RLC, based transmission system, includes:
a transmitting apparatus, adapted to start a first timer used for monitoring one upper layer Protocol Data Unit, PDU, and stop retransmitting all RLC data blocks of the upper layer PDU in a buffer after the timer expires, if not all acknowledgement indications of all the RLC data blocks of the upper layer PDU are received before the first timer expires; and
a receiving apparatus, adapted to start a second timer used for monitoring the upper layer PDU when a first RLC of the upper layer PDU is received; and stop receiving, after the timer expires, RLC data blocks which are not received correctly of the upper layer PDU if not all the RLC data blocks of the upper layer PDU are received correctly before the second timer expires.

A transmitting apparatus is adapted to start a timer used for monitoring one upper layer Protocol Data Unit, PDU, and stop retransmitting all RLC data blocks of the upper layer PDU in a buffer after the timer expires, if not all acknowledgement indications of all the RLC data blocks of the upper layer PDU are received before the timer expires.

Preferably, the transmitting apparatus includes a transmitting module and a timer module.
the transmitting module is adapted to send a notification message used for starting the timer to the timer module of the transmitting module when the upper layer PDU is requested to be transmitted, or when beginning transmitting a first RLC data block of the upper layer PDU, and stop retransmitting, after the timer expires, all the RLC data blocks of the upper layer PDU in the buffer if not all acknowledgement indications of all the RLC data blocks in the upper layer PDU are received before the timer expires; and
the timer module is adapted to receive the notification message used for starting the timer for monitoring the upper layer PDU from the transmitting module, and start the timer for monitoring the upper layer PDU according to the notification message.

Preferably, the transmitting apparatus further includes a buffer module.
a buffer is adapted to receive a notification message used for clearing the RLC data blocks from the transmitting module, and clear all the RLC data blocks of the upper layer PDU buffered according to the notification message; and
the transmitting module is further adapted to send the notification message used for clearing the RLC data blocks to the buffer after the timer expires, if not all acknowledgement indications of all the RLC data blocks of the upper layer PDU are received before the timer expires.

A receiving apparatus is adapted to start a timer used for monitoring one upper layer Protocol Data Unit, PDU, when a first RLC data block of the upper layer PDU is received, and stop receiving, after the timer expires, RLC data blocks which are not received correctly of the upper layer PDU if not all RLC data blocks of the upper layer PDU are received correctly before the timer expires.

Preferably, the receiving apparatus includes: a receiving module and a timer module.
the receiving module is adapted to send a notification message used for starting the timer to the timer module in the receiving module upon the receipt of the first RLC data block of the upper layer PDU; and stop receiving, after the timer expires, the RLC data blocks which are not received correctly of the upper layer PDU if not all the RLC data blocks of the upper layer PDU are received correctly before the timer expires; and
the timer module is adapted to receive the notification message used for starting the timer for monitoring the upper layer PDU from the receiving module, and start the timer for monitoring the upper layer PDU according to the notification message.

As can be seen from the above schemes, only one timer is required to be set for one upper layer PDU by taking the upper layer PDU as one unit. If not all the acknowledgement indication of all the RLC data blocks of the upper layer PDU is received from the receiving endpoint before the timer expires, the reception of the acknowledgement indication is not continued after the timer expires, and the retransmission operation is terminated after the timer expires. Therefore, the transmission delay is decreased, and the system resources are saved.

### Brief Description of the Drawings

Figure 1 is a flowchart illustrating an NPM transmission mode in accordance with a conventional method;
Figure 2 is a flowchart illustrating a RLC based transmission method in accordance with an embodiment of the present invention;
Figure 3 is a structural diagram illustrating a RLC based transmission system in accordance with an embodiment of the present invention;
Figure 4 is a schematic diagram illustrating an interior structure of the transmitting apparatus in the RLC based transmission system described in Figure 3; and
Figure 5 is a schematic diagram illustrating an interior structure of the receiving apparatus in the RLC based transmission system described in Figure 3.

### Detailed Description of the Invention

According to one embodiment of the present invention, each upper layer PDU required to be transmitted is taken as one unit, and only one timer is started for each upper layer PDU. A transmitting endpoint starts one timer used for monitoring one upper layer PDU when the transmitting endpoint requests to transmit the upper layer PDU, or when transmits the first RLC data block of the upper layer PDU. If not all the acknowledgement indications of all RLC data blocks of the upper layer PDU are received from the receiving endpoint before the timer expires, the reception of the acknowledgement indications is not continued after the timer expires, and the retransmission operation is terminated after the timer expires. Furthermore, all RLC data blocks of the upper layer PDU in the buffer may be cleared. As a result, the transmission delay is decreased, and the system resources are saved.

If one RLC data block contains data of more than one upper layer PDUs, and the RLC data block does not need to be retransmitted by any of the upper layer PDUs, the RLC data block is not required to be retained in a buffer. If the RLC data block need to be retransmitted by one or more than one of the upper layer PDUs, the RLC data block is continued to be retained in the buffer.

Furthermore, according to the embodiments of the present invention, only one timer is set when the first RLC data block of one upper layer PDU is received at the receiving endpoint. If there is an RLC data block which is transmitted falsely in the upper layer PDU, and the RLC data block which is transmitted falsely is not retransmitted correctly before the timer expires, the awaiting reception is stopped after the timer expires. It can be seen that the transmission delay corresponds to the length of time set for one timer with respect to the whole upper layer PDU, and therefore the transmission delay could be further decreased.

An RLC based transmission method will firstly be described as follows by still taking GPRS as an example in accordance with an embodiment of the present invention.

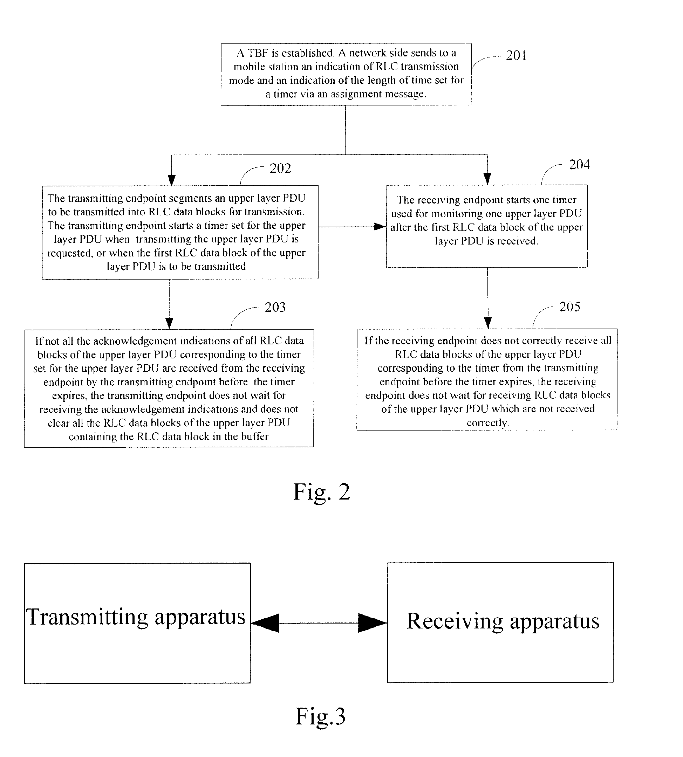

Figure 2 is a flowchart illustrating a RLC based transmission method in accordance with an embodiment of the present invention. Processes in a transmitting endpoint and in a receiving endpoint of the present embodiment correspond to the RLC based transmission method provided by the present invention. As shown in figure 2, the flowchart includes processes described as follows.

Block 201: A TBF is established. A network side sends to a mobile station an indication of RLC transmission mode and an indication of the length of time set for a timer via an assignment message. Then, Block 202 and Block 203 are performed at a transmitting endpoint, and Block 204 and Block 205 are performed at a receiving endpoint. The RLC transmission mode is a RLC transmission mode provided by embodiments of the present invention.

Block 202: The transmitting endpoint segments an upper layer PDU to be transmitted into RLC data blocks for transmission. The transmitting endpoint starts a timer set for the upper layer PDU when transmitting the upper layer PDU is requested, or when beginning transmitting the first RLC data block of the upper layer PDU, or when the upper layer PDU is received and prepared to be transmitted.

In Block 202, the upper layer PDU may be segmented into one or more than one RLC data blocks, i.e. the upper layer PDU may be transmitted via a plurality of RLC data blocks. When one upper layer PDU is segmented into RLC data blocks, an ending flag of the upper layer PDU is carried in the last RLC data block. Moreover, part of the upper layer PDU may occupy part of one RLC data block, and one RLC data block may include data belonging to two different upper layer PDUs. Table 1 is a schematic table showing the relations between upper layer PDUs and RLC data blocks.

**Table 1**

| | | | | | | | | | | | |
|---|---|---|---|---|---|---|---|---|---|---|---|
| Upper layer PDU | PDU1 | | | PDU2 | | | | PDU3 | | | |
| RLC data block | 1 | 2 | 3 | 4 | 5 | 6 | 7 | | 8 | 9 | 10 |

As shown in Table 1, three upper layer PDUs are listed. PDU1 is transmitted by using three RLC data blocks, i.e. RLC data block 1, RLC data block 2 and RLC data block 3. PDU2 is transmitted by using 3.5 RLC data blocks, i.e. RLC data block 4, RLC data block 5, RLC data block 6 and the first half of RLC data block 7. PDU3 is transmitted by using 3.5 RLC data blocks, i.e. RLC data block 8, RLC data block 9, RLC data block 10 and the second half of RLC data block 7. A timer is started when one RLC data block of one upper layer PDU is being transmitted at the first time. If the RLC data blocks are transmitted in an order of 1 to 10 as shown in Table 1 during the transmission, timers could be started as follows. One timer used for monitoring PDU1 is started when RLC data block 1 is being transmitted with respect to PDU1. One timer used for monitoring PDU2 is being started when RLC data block 4 is transmitted with respect to PDU2. One timer used for monitoring PDU3 is being started when RLC data block 7 is transmitted with respect to PDU3.

Block 203: If not all the acknowledgement indications of all RLC data blocks of the upper layer PDU corresponding to the timer set for the upper layer PDU are received from the receiving endpoint by the transmitting endpoint before the timer expires, the transmitting endpoint does not wait for receiving the acknowledgement indications and does not perform the retransmission operation after the timer expires. The transmitting endpoint processes the subsequent operations on the assumption that the transmission of the upper layer PDU is completed. All RLC data blocks of the upper layer PDU, which contains the not acknowledgement RLC data block, in the buffer may not be retained, i.e. all RLC data blocks of the upper layer PDU containing the not acknowledgement RLC data block may be cleared. Till then, the processes at the transmitting endpoint are completed.

This process is further described as follows with reference to the relations between the upper layer PDUs and the RLC data blocks as shown in Table 1. If the acknowledgement indications of RLC data block 1 and RLC data block 3 are received and the acknowledgement indication of RLC data block 2 is not received before the timer expires which is used for monitoring PDU1, the transmitting endpoint does not wait for receiving the acknowledgement indication of RLC data block 2 after the timer expires. The transmitting endpoint processes the subsequent operations on the assumption that the transmission of PDU1 is completed. The retransmission of RLC data block 2 is not performed. All RLC data blocks of PDU1 in the buffer may be cleared. As for RLC data block 1 and RLC data block 3 of which the acknowledgement indications are received, they may be cleared from the buffer after the acknowledgement indications are received, or they may not be cleared from the buffer after the acknowledgement indications are received, but be cleared together with all RLC data blocks of the whole PDU1 at last, or they may be cleared at any other time. If a message indicating that RLC data block 2 is transmitted falsely is received before the timer used for monitoring PDU1 expires, RLC data block 2 may be retransmitted, and the reception of the acknowledgement indication is awaited before the timer expires. If no acknowledgement indication indicating that RLC data block is transmitted correctly is received before the timer expires, RLC data block 2 will not be retransmitted after the timer expires. And then, all RLC data blocks of PDU1 in the buffer may be cleared, and not retransmitted.

If acknowledgement indications indicating that RLC data block 1, RLC data block 2 and RLC data block 3 are transmitted correctly are received before the timer used for monitoring PDU1 expires, the timer used for monitoring PDU1 may be terminated. And all RLC data blocks of PDU1 in the buffer may be cleared at this moment, or at any other time.

The processes of other upper layer PDUs and RLC data blocks of the upper layer PDUs are performed similarly as those of PDU1 and RLC data blocks of PDU1. However, as for RLC data block 7 shown in Table 1, RLC data block 7 contains data from two upper layer PDUs. If the acknowledgement indication of RLC data block 7 is not received at the transmitting endpoint, it is required to wait for receiving the acknowledgement indication of RLC data block 7 from the receiving endpoint until both the timer used for monitoring PDU 2 and the timer used for monitoring PDU 3 expire. After the timer used for monitoring PDU2 expires, if RLC data blocks of PDU2 in the buffer are to be cleared, RLC data block 7 should be retained until the timer used for monitoring PDU3 expires. Then, RLC data block 7 may be cleared with other RLC data blocks of PDU3 in the buffer. That is to say, if one RLC data block contains data from more than one upper layer PDUs, the RLC data block is required to be retained in the buffer unless all upper layer PDUs need not retransmit the RLC data block, that is, the RLC data block is continued to be retained in the buffer if one or more than one of the upper layer PDUs need to retransmit the RLC data block.

Block 204: The receiving endpoint starts one timer used for monitoring one upper layer PDU when the first RLC data block of the upper layer PDU is received.

This process is further described as follows with reference to the relations between the upper layer PDUs and the RLC data blocks as shown in Table 1. Normally, the timer should be started when the first RLC data block of the upper layer PDU is received. If the RLC data blocks are received in an order from 1 to 10 as shown in Table 1 during the reception, timers could be started as follows. The timer used for monitoring PDU1 is started when RLC data block 1 is received. The timer used for monitoring PDU2 is started when RLC data block 4 is received. And the timer used for monitoring PDU3 is started as RLC data block 7 is received. The following processes are described by taking the reception in the order from 1 to 10 as an example.

It is assumed that RLC data block 2 is transmitted falsely here. If it can be identified from falsely-transmitted RLC data block 2 that RLC data block 2 does not contain data from any other upper layer PDUs, i.e. it is identified from a falsely-transmitted RLC data block that an ending flag of an upper layer PDU is carried, the timer can still be set in the above normal manner. If it can not be identified from falsely-transmitted RLC data block 2 that RLC data block 2 contains data from any other upper layer PDUs or not, RLC data block 2 is made as the start of a new upper layer PDU. For example, it is marked as PDUX2, and a timer used for monitoring PDUX2 is started. Because it can not be determined that RLC data block 2 is the start of a new upper layer PDU, it can not be determined that whether RLC data block 3 is the start of a new upper layer PDU either. Therefore, RLC data block 3 is made as the start of a new upper layer PDU. For example it is marked as PDUX3, and then a timer used for monitoring PDUX3 is started. However, it can be determined that RLC data block 4 is the start of a new upper layer PDU because RLC data block 3 contains an ending flag of an upper layer PDU. Therefore, a timer used for monitoring PDU2 is started after RLC data block 4 is received. On the analogy of aforementioned mechanism, if RLC data block 7 is transmitted falsely, and it can not be identified the upper layer PDU to which RLC data block 7 belongs, RLC data block 7 would be regarded as the start of a new upper layer PDU. For example, it is marked as PDUX7, and then a timer used for monitoring PDUX7 is started. Similarly, RLC data block 8 is marked as the start of a new upper layer PDU, for example it is marked as PDUX8, and a timer used for monitoring PDUX8 is started. The processes for RLC data blocks of other upper layer PDUs are performed in the same manner.

When one RLC data block is transmitted falsely, information indicating the falseness is transmitted to the transmitting endpoint. And the RLC data block is required to be retransmitted at the transmitting endpoint. Then, the reception of a correct RLC data block to be retransmitted corresponding to the false RLC data block is awaited. And the timer, which is used for monitoring the corresponding upper layer PDU, and the RLC data block are corrected according to the result of the awaiting.

Block 205: If the receiving endpoint does not correctly receive all RLC data blocks of the upper layer PDU corresponding to the timer from the transmitting endpoint before the timer expires, the receiving endpoint does not wait for receiving RLC data blocks of the upper layer PDU which are not received correctly, and performs the subsequent encapsulation processes. Till then, the process at the receiving endpoint is completed.

In this process, if the transmitting endpoint sets a timer for the currently received upper layer PDU in a normal manner, and RLC data block 2 is transmitted falsely, and RLC data block 2 is not received correctly in the process of waiting for the retransmission by the transmitting endpoint before the timer expires, the reception of RLC data block 2 is not awaited and the subsequent encapsulation processes are performed after the timer expires. If RLC data block 2 is received correctly before the timer expires, the timer used for monitoring PDU1 is stopped normally and the subsequent encapsulation processes are performed.

If it can not be identified from falsely-transmitted RLC data block 2 that whether RLC data block 2 contains data of any other upper layer PDUs or not as described in Block 204 at the transmitting endpoint, two timers are started. It can be determined that RLC data block 2 belongs to PDU1, and that RLC data block 1, RLC data block 2 and RLC data block 3 belong to PDU1 if RLC data block 2 is correctly received before the timer used for monitoring PDU 1 at the receiving endpoint expires. Then the timers, which do not have to be started, i.e. timers used for monitoring PDUX2 and PDUX3, are stopped. At the same time, the timer used for monitoring PDU1 is stopped normally because RLC data block 1, RLC data block 2 and RLC data block 3 are received correctly. If retransmitted RLC data block 2 is received before the timer used for monitoring PDU1 at the receiving endpoint expires, but RLC data block 2 is still transmitted falsely this time, it can be determined from this that RLC data block 2 belongs to PDU1, and that RLC data block 1, RLC data block 2 and RLC data block 3 belong to one PDU, i.e. PDU1. Then the timers which does not have to be started, i.e. timers used for monitoring PDUX2 and PDUX3, are stopped. And the timer used for monitoring PDU1 is not stopped and the retransmission of RLC data block 2 is continued to be awaited. The timer used for monitoring PDU1 is not stopped until RLC data block 2 is received correctly, or the awaiting reception is not stopped until the timer used for monitoring PDU1 expires.

If retransmitted RLC data block 2 is not received before the timer used for monitoring PDU1 at the receiving endpoint expires, or RLC data block 2, which can identify the information of the upper layer PDU to which RLC data block 2 belongs, is not received before the timer, which is used for monitoring PDU1 at the receiving endpoint, expires, the subsequent processes may be performed without awaiting the reception of retransmitted RLC data block 2 for PDU1. However, because it still can not be determined whether RLC data block 2 belongs to a new upper layer PDU or not, the timer used for monitoring PDUX2 is not stopped. If RLC data block 2 is received correctly before the timer used for monitoring PDUX2 expires, even if it can obtain that RLC data block 2 and RLC data block 3 belong to PDU1, because the timer used for monitoring PDU1 expires, the transmission delay of RLC data block 2 and RLC data block 3 may not satisfy the requirement of transmission delay, then, the timers which does not have to be started, i.e. timers for monitoring PDUX2 and PDUX3, are stopped. If RLC data block 2 is not received correctly before the timer used for monitoring PDUX2 expires, the retransmission of PDUX2 is not awaited. But the timer used for monitoring PDUX3 is not stopped. If RLC data block 3 is correctly received, the timer used for monitoring PDUX3 is stopped normally because RLC data block 3 contains an ending flag of the upper layer PDU.

If it can not be identified from falsely-transmitted RLC data block 7 that whether RLC data block 7 contains data of any other upper layer PDUs or not as described in Block 204 at the transmitting endpoint, two timers are started, i.e. the timer used for monitoring PDUX7 and the timer used for monitoring PDUX8. It can be determined that RLC data block 7 contains data of two upper layer PDUs if RLC data block 7 is received correctly before the timer, which is used for monitoring PDUX 7 at the receiving endpoint, expires. And then, the timer which does not have to be started, i.e. timer used for monitoring PDUX8, is stopped, and the timer used for monitoring PDUX7 is continued to be used as the timer used for monitoring PDU3. If RLC data block 7 is not correctly received before the timer used for monitoring PDUX 7 expires, processes relating to RLC data block 7 are similar to those relating to incorrectly received RLC data block 2 mentioned above.

The above RLC based transmission method of the present invention is described in accordance with the embodiments thereof. The above Block 204 and Block 205 may not be performed according to the operations of the above embodiments, but be performed according to Block 104 and Block 105 of the conventional method as shown in Figure 1.

An RLC based transmission system and apparatus of the present invention are described as follows in accordance with other embodiments thereof.

Figure 3 is a structural diagram illustrating an RLC based transmission system according to one embodiment of the present invention. As shown in Figure 3, the system includes a transmitting apparatus and a receiving apparatus. The transmitting apparatus may be located at a network side or in a mobile station. And the receiving apparatus may be located in a mobile station or at a network side. Alternatively, both the transmitting apparatus and the receiving apparatus are located at a network side and in a mobile station. Before the transmitting apparatus or the receiving apparatus is used in the mobile station, an indication of RLC transmission mode and an indication of the length of time set for a timer are transmitted to the mobile station via an assignment message from the network side. The above RLC transmission mode is the RLC transmission mode provided by embodiments of the present invention.

The transmitting apparatus is adapted to start a timer used for monitoring an upper layer PDU to be transmitted, and stop retransmitting all RLC data blocks of the upper layer PDU in a buffer if not all the acknowledgement indications of all RLC data blocks of the upper layer PDU are received before the timer expires.

Further, the transmitting apparatus segments the upper layer PDU to be transmitted into RLC data blocks for transmission. And the transmitting apparatus starts the timer used for monitoring the upper layer PDU when the first RLC data block of the upper layer PDU is to be transmitted, or when the upper layer PDU is received and prepared to be transmitted, or when the upper layer PDU is requested to be transmitted.

If not all the acknowledgement indications of all RLC data blocks of the upper layer PDU corresponding to the timer set for the upper layer PDU are received from the receiving endpoint before the timer expires, the transmitting apparatus does not wait for receiving the acknowledgement indications after the timer expires, and processes the subsequent operations on the assumption that the transmission of the upper layer PDU is completed. All RLC data blocks of the upper layer PDU in the buffer are not required to be retransmitted. And all RLC data blocks of the upper layer PDU containing the not acknowledged RLC data block in the buffer may be cleared. If a message requesting retransmission of an RLC data block is received from the receiving module before the timer expires, the transmitting apparatus transmits the RLC data block requesting retransmission to the receiving apparatus.

The receiving apparatus is adapted to start one timer set for the upper layer PDU after the first RLC data block of the upper layer PDU is received. And if not all RLC data blocks of the upper layer PDU are correctly received before the timer expires, the receiving apparatus is adapted to stop receiving RLC data blocks, which are not received correctly, of the upper layer PDU after the timer expires.

The receiving apparatus receives RLC data blocks of the upper layer PDU sent from the transmitting apparatus. And if one RLC data block is transmitted falsely, the receiving apparatus transmits information used for indicating the falseness to the transmitting endpoint, and requires the transmitting apparatus to retransmit the RLC data block. After the first RLC data block of one upper layer PDU is received, the receiving apparatus starts a timer used for monitoring the upper layer PDU. Moreover, if not all RLC data blocks of the upper layer PDU corresponding to the timer are correctly received from the transmitting endpoint before the timer expires, the receiving apparatus performs the subsequent encapsulation process after the timer expires, without waiting for receiving the RLC data blocks, which are not received correctly, of the upper layer PDU.

The interior structures of the transmitting apparatus and the receiving apparatus can be embodied in various manners respectively. One embodiment of the particular implementation of the transmitting apparatus and the receiving apparatus is described as follows.

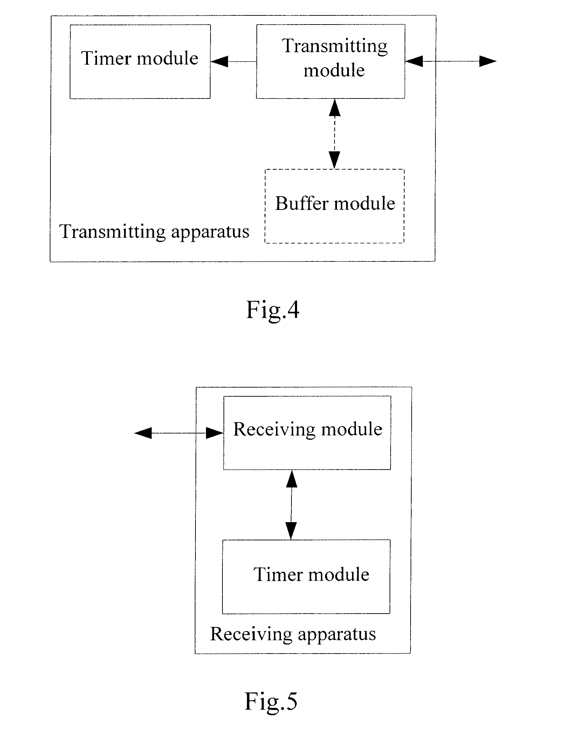

Figure 4 is a schematic diagram illustrating an interior structure of a transmitting apparatus in the RLC based transmission system shown in Figure 3. As shown in Figure 4, the transmitting apparatus includes a transmitting module and a timer module.

The transmitting module is adapted to segment an upper layer PUD to be transmitted into RLC data blocks, and saves the RLC data blocks into the buffer, and simultaneously transmits the RLC data blocks to the receiving module. The transmitting module is further adapted to send a notification message used for starting a timer to the timer module in the transmitting apparatus in order to notify the timer module to start the timer which is used for monitoring the upper layer PDU when beginning transmitting the first RLC data block of the upper layer PDU, or when the upper layer PDU is received and prepared to be transmitted, or when the upper layer PDU is requested to be transmitted. The transmitting module is adapted to stop retransmitting all RLC data blocks of the upper layer PDU in a buffer after the timer expires if not all acknowledgement indications of the RLC data blocks in the upper layer PDU are received from the receiving apparatus before the timer expires. If a message for retransmission is received form the receiving apparatus before the timer expires, the transmitting module is adapted to read the RLC data block required to be retransmitted from the buffer and send it to the receiving apparatus.

The timer module in the transmitting apparatus is adapted to receive the notification message used for starting the timer sent from the transmitting module, and start the timer used for monitoring the upper layer PDU according to the notification message.

Moreover, as indicated by the dashed part in Figure 4, the transmitting apparatus further includes a buffer, which is adapted to buffer the RLC data blocks of the upper layer PDU from the transmitting module, receive a notification message of no need to retain the RLC data blocks sent from the transmitting module, and clear all RLC data blocks of the corresponding upper layer PDU in the buffer according to the notification message.

If not all the acknowledgement indications of all RLC data blocks of the upper layer PDU are received from the receiving module before the timer expires, the transmitting module sends the notification message of no need to retain the RLC data blocks to the buffer after the timer expires.

Figure 5 is a schematic diagram illustrating an interior structure of the receiving apparatus in the RLC based transmission system shown in Figure 3. As shown in Figure 5, the receiving apparatus includes a receiving module and a timer module.

The receiving module is adapted to receive RLC data blocks of an upper layer PDU from the transmitting apparatus. And if one RLC data block is transmitted falsely, the receiving module is adapted to transmit information used for indicating the falseness to the transmitting apparatus, and require the transmitting apparatus to retransmit the RLC data block. After the first RLC data block of the upper layer PDU is received, the receiving module sends a notification message to the timer module in the receiving apparatus in order to notify the timer module to start a timer used for monitoring the upper layer PDU. If not all the transmitted RLC data blocks of the upper layer PDU corresponding to the timer are correctly received before the timer expires, the receiving module does not wait for receiving the RLC data blocks, which are not correctly received, of the upper layer PDU after the timer expires.

The timer module in the receiving apparatus is adapted to receive the notification message from the receiving module, and start the timer used for monitoring the upper layer PDU according to the notification message.

In actual applications, the receiving apparatus of the system may also perform the processes according to the NPM transmission mode in the conventional method.

According to the above embodiments of the present invention, one upper layer PDU required to be transmitted is taken as one unit, and only one timer is started for this upper layer PDU. When the transmitting apparatus requires for transmitting the current upper layer PDU, or when the transmitting apparatus transmits the first RLC data block of the upper layer PDU, the transmitting apparatus starts the timer used for monitoring the upper layer PDU. If not all the acknowledgement indications of all RLC data blocks of the upper layer PDU are received from the receiving apparatus before the timer expires, the reception of the acknowledgement indications is not continued after the timer expires. All RLC data blocks of the upper layer PDU in the buffer may be cleared. As a result, the transmission delay is decreased and the system resources are saved.

Moreover, in the conventional method, one timer is set for each RLC data block in which falseness is detected at the receiving apparatus. If one upper layer PDU contains several RLC data blocks, e.g. one upper layer PDU contains seven RLC data blocks, one timer is started to wait for the correct retransmission if the seventh RLC data block is transmitted falsely. Similar waiting would happen for the former six RLC data blocks, waiting for being encapsulated together with the seventh RLC data block after the seventh RLC data block is transmitted correctly. If the seventh RLC data block retransmitted is not correctly received before the timer expires, the timer of the whole upper layer PDU would expire, which causes a large transmission delay. Therefore, a receiving endpoint of the present invention starts a timer if the first RLC data block of one upper layer PDU is received. If an RLC data block is transmitted falsely, the correct reception is not continued to be awaited after the timer expires, if the retransmitted RLC data block of the upper layer PDU is not received correctly before the timer expires. It can be seen that this transmission delay is the length of time of one timer with respect to the whole upper layer PDU, and therefore the transmission delay is further decreased.

Finally, as for one falsely-transmitted RLC data block, if it can not be determined whether the RLC data block belongs to the same upper layer PDU as the former RLC data blocks, a corresponding process is performed, i.e. another timer is set and so on. If the RLC data block is correctly received before the timer expires, it can be determined that the RLC data block belongs to the same upper layer PDU. And the timers which do not have to be started are stopped. If the RLC data block is not correctly received before the timer expires, it can not be determined that whether the RLC data block belongs to the same upper layer PDU, then subsequent processes are performed separately for other RLC data blocks in order to guarantee the data transmission as correct and swift as possible.

The object, technical solution and beneficial effect of the present invention are further described in the above preferred embodiments thereof. The foregoing descriptions are merely the embodiments of the present invention and are not intended to limit the protection scope thereof. Any modification, equivalent replacement and improvement made under the spirit and principle of the present invention should be covered in the protection scope thereof.

## Claims

1. A Radio Link Control, RLC, based transmission method, comprising:
starting, by a transmitting endpoint, a timer used for monitoring an upper layer Protocol Data Unit, PDU; and
stopping retransmitting after the timer expires, by the transmitting endpoint, all RLC data blocks of the upper layer PDU in a buffer if not all acknowledgement indications of all the RLC data blocks of the upper layer PDU are received from a receiving endpoint before the timer expires.

2. The method of Claim 1, if not all acknowledgement indications of all the RLC data blocks of the upper layer PDU are received from the receiving endpoint before the timer expires, further comprising:
not retaining all the RLC data blocks of the upper layer PDU from the buffer after the timer expires.

3. The method of Claim 1, wherein starting the timer used for monitoring the PDU comprises:
starting the timer when the upper layer PDU is requested to be transmitted, or when beginning transmitting a first RLC data block of the upper layer PDU.

4. The method of Claim 1, further comprising:
starting, by the receiving endpoint, a timer used for monitoring the upper layer Protocol Data Unit, PDU, when a first RLC data block of the upper layer PDU is received; and
stopping, after the timer expires, receiving RLC data blocks which are not received correctly of the upper layer PDU if not all RLC data blocks of the upper layer PDU are received correctly before the timer expires.

5. The method of any one of Claims 1 to 4, wherein when one RLC data block contains data of more than one upper layer PDUs, the method further comprises:
not retaining the RLC data block in the buffer when the RLC data block is not needed to be retransmitted by all the upper layer PDUs.

6. The method of any one of Claims 1 to 4, wherein when one RLC data block contains data of more than one upper layer PDUs, the method further comprises:
retaining the RLC data block in the buffer when the RLC data block is needed to be retransmitted by one or more than one of the upper layer PDUs.

7. The method of Claim 4, further comprising:
regarding, at the receiving endpoint, a false RLC data block as a new upper layer PDUx, and starting a timer used for monitoring PDUx if it is unable to identify data contained in the false RLC data block is from more than one upper layer PDUs;
regarding the RLC data block following PDUx as a new upper layer PUDy, and starting another timer used for monitoring PDUy; and
waiting for receiving a retransmitted correct RLC data block corresponding to the false RLC data block, and correcting timers and RLC data blocks according to the result of the waiting.

8. The method of Claim 7, wherein correcting the timers and the RLC data blocks according to the result of the waiting comprises:
stopping timers which do not have to be started according to the data of upper layer PDUs contained in the RLC data block if the retransmitted correct RLC data block is received; and stopping the timer used for monitoring the upper layer PDU normally if all the RLC data blocks belonging to the upper layer PDU are correctly received; and
regarding the false RLC data block as a new upper layer PDU if the correct RLC data block is not received, and regarding the RLC data block as a new PDU if a next RLC data block following the false RLC data block is correctly transmitted.

9. A Radio Link Control, RLC, based transmission system, comprising:
a transmitting apparatus, adapted to start a first timer used for monitoring one upper layer Protocol Data Unit, PDU, and stop retransmitting all RLC data blocks of the upper layer PDU in a buffer after the timer expires, if not all acknowledgement indications of all the RLC data blocks of the upper layer PDU are received before the first timer expires; and
a receiving apparatus, adapted to start a second timer used for monitoring the upper layer PDU when a first RLC of the upper layer PDU is received; and stop receiving, after the timer expires, RLC data blocks which are not received correctly of the upper layer PDU if not all the RLC data blocks of the upper layer PDU are received correctly before the second timer expires.

10. A transmitting apparatus, adapted to start a timer used for monitoring one upper layer Protocol Data Unit, PDU, and stop retransmitting all RLC data blocks of the upper layer PDU in a buffer after the timer expires, if not all acknowledgement indications of all the RLC data blocks of the upper layer PDU are received before the timer expires.

11. The transmitting apparatus of Claim 9, the transmitting apparatus comprises a transmitting module and a timer module; wherein
the transmitting module is adapted to send a notification message used for starting the timer to the timer module of the transmitting module when the upper layer PDU is requested to be transmitted, or when beginning transmitting a first RLC data block of the upper layer PDU, and stop retransmitting, after the timer expires, all the RLC data blocks of the upper layer PDU in the buffer if not all acknowledgement indications of all the RLC data blocks in the upper layer PDU are received before the timer expires; and
the timer module is adapted to receive the notification message used for starting the timer for monitoring the upper layer PDU from the transmitting module, and start the timer for monitoring the upper layer PDU according to the notification message.

12. The transmitting apparatus of Claim 10, further comprising a buffer module:
a buffer is adapted to receive a notification message used for clearing the RLC data blocks from the transmitting module, and clear all the RLC data blocks of the upper layer PDU buffered according to the notification message; and
the transmitting module is further adapted to send the notification message used for clearing the RLC data blocks to the buffer after the timer expires, if not all acknowledgement indications of all the RLC data blocks of the upper layer PDU are received before the timer expires.

13. A receiving apparatus, adapted to start a timer used for monitoring one upper layer Protocol Data Unit, PDU, when a first RLC data block of the upper layer PDU is received, and stop receiving, after the timer expires, RLC data blocks which are not received correctly of the upper layer PDU if not all RLC data blocks of the upper layer PDU are received correctly before the timer expires.

14. The receiving apparatus of Claim 12, wherein the receiving apparatus comprises:
a receiving module and a timer module,
the receiving module is adapted to send a notification message used for starting the timer to the timer module in the receiving module upon the receipt of the first RLC data block of the upper layer PDU; and stop receiving, after the timer expires, the RLC data blocks which are not received correctly of the upper layer PDU if not all the RLC data blocks of the upper layer PDU are received correctly before the timer expires; and
the timer module is adapted to receive the notification message used for starting the timer for monitoring the upper layer PDU from the receiving module, and start the timer for monitoring the upper layer PDU according to the notification message.
